# EUROPEAN PATENT APPLICATION

(11) **EP 4 741 160 A1**
(43) Date of publication of application: **13.05.2026**
(21) Application number: 24839258.1
(22) Date of filing: 01.04.2024
(51) Int. Cl.: B32B 27/32, B65D 65/40

(54) **PACKAGING FILM, PACKAGING CONTAINER, AND PACKAGING PRODUCT**

(30) Priority: 07.07.2023 JP 2023112031
(71) Applicant: Toppan Holdings Inc., Tokyo 110-0016 (JP)
(72) Inventor: OTSUKA Hiroyuki, Tokyo 110-0016 (JP); ITO Yutaka, Tokyo 110-0016 (JP); NISHIHARA Tsuguki, Tokyo 110-0016 (JP); OCHIAI Shinya, Tokyo 110-0016 (JP); TOMATSURI Takeo, Tokyo 110-0016 (JP)
(74) Representative: Hoffmann Eitle
(86) International application number: PCT/JP2024/013507
(87) International publication number: WO 2025/013360

(57) **Abstract**

A packaging film includes a gas barrier film, an adhesive layer, and a sealant layer in this order. The gas barrier film includes a substrate layer, a vapor deposition layer, and a coating layer provided between the vapor deposition layer and the adhesive layer to cover the vapor deposition layer. The substrate layer includes a polyolefin substrate layer containing a polyolefin-based resin, and the coating layer has a hardness of 1.15 GPa or less measured in a cross section thereof using a nanoindentation method. The adhesive layer is obtained by bonding an adhesive resin composition containing a polyolefin adhesive resin to the gas barrier film by melt extrusion, and the sealant layer contains a polyolefin-based resin.

## Description

### [Technical Field]

The present disclosure relates to packaging films, packaging containers, and packaged products.

### [Background Art]

**In** recent years, packaging films are increasingly being made from mono-materials to facilitate material recycling. On the other hand, packaging materials are also required to maintain functions such as gas barrier properties.

**In** contrast, packaging films are under consideration which include a gas barrier film, which is formed by providing a gas barrier layer by vapor deposition on a polyolefin substrate layer containing a polyolefin-based resin and a polyolefin sealant layer containing a polyolefin-based resin, with these layers bonded together by dry lamination using an adhesive forming a non-polyolefin-based resin.

However, such packaging films, which use adhesives forming non-polyolefin-based resins, may deteriorate the quality of the recycled resins obtained from material recycling of the packaging films.

Therefore, in order to suppress deterioration of the quality of recycled resins, laminates are known which use, as an adhesive layer, an adhesive resin composition containing a polyolefin adhesive resin such as maleic anhydride graft-polymerized polypropylene, in place of an adhesive forming a non-polyolefin-based resin (see PTL 1 below).

### [Citation List]

### [Patent Literatures]

PTL 1: JP2020049679A

### [Summary of the Invention]

### [Technical Problem]

However, although the laminate described in PTL 1 can increase the ratio of polyolefin-based resins in the entire laminate, there is still room for improvement in terms of gas barrier properties.

The present disclosure has been made in light of the issues mentioned above and aims to provide a packaging film which can suppress decrease in the ratio of polyolefin-based resins in the entire packaging film, while exhibiting excellent gas barrier properties, and to provide a packaging container and a packaged product.

### [Solution to Problems]

**In** order to solve the above issues, an aspect of the present disclosure provides a packaging film including a gas barrier film, an adhesive layer, and a sealant layer in this order, wherein the gas barrier film includes a substrate layer, a vapor deposition layer, and a coating layer provided between the vapor deposition layer and the adhesive layer to cover the vapor deposition layer; the substrate layer includes a polyolefin substrate layer containing a polyolefin-based resin; the coating layer has a hardness of 1.15 GPa or less measured in a cross section thereof using a nanoindentation method; the adhesive layer is obtained by bonding an adhesive resin composition containing a polyolefin adhesive resin to the gas barrier film by melt extrusion; and the sealant layer contains a polyolefin-based resin.

According to the above packaging film, decrease in the ratio of polyolefin-based resins in the entire packaging film can be suppressed, while exhibiting excellent gas barrier properties.

The inventors of the present disclosure presume that the reasons for the above effect are as follows.

That is, after bonding of an adhesive resin composition containing a polyolefin adhesive resin to a gas barrier film by melt extrusion, the adhesive resin composition is at a high temperature when it comes into contact with the gas barrier film, but is then cooled by a cooling roll to a low temperature and contracts. In this case, the contraction stress is not necessarily transmitted directly to the vapor deposition layer, but may be transmitted indirectly via the coating layer. The coating layer, which is sufficiently soft as having a hardness of 1.15 GPa or less, may effectively mitigate the expansion and contraction stresses. Therefore, expansion and contraction of the vapor deposition layer may be suppressed to thereby suppress expansion and contraction of the fragile vapor deposition layer. Consequently, the packaging film may be able to have excellent gas barrier properties.

Furthermore, the gas barrier film, which includes a sufficiently soft coating layer, can effectively suppress expansion and contraction of the vapor deposition film, although the gas barrier film is thin. Therefore, decrease in the ratio of polyolefin-based resins in the entire packaging film can be suppressed.

In the above packaging film, the coating layer is preferably a gas barrier coating layer.

In this case, gas barrier properties of the packaging film are improved. Furthermore, even if damage such as cracking occurs in the vapor deposition layer, deterioration in gas barrier properties of the packaging film can be suppressed.

In the packaging film, it is preferable that the polyolefin substrate layer is a stretched film.

In this case, crystallinity of the polyolefin substrate layer and the heat-resistant layer included in the substrate layer is improved to raise the melting point, and therefore the difference in melting point between the sealant layer and the substrate layer can be increased, and thus melting of the substrate layer can be easily suppressed when heat-sealing the packaging film.

In the above packaging, it is preferable that the gas barrier film further includes an anchor coat layer containing a polyurethane resin between the vapor deposition layer and the substrate layer.

In this case, even if the polyolefin substrate layer contracts after bonding of an adhesive resin composition to the gas barrier film by melt extrusion, expansion and contraction stresses transferred to the vapor deposition layer from the substrate layer may be easily mitigated by the anchor coat layer containing a polyurethane resin, and therefore expansion and contraction of the fragile vapor deposition layer may be suppressed. Consequently, the packaging film may be able to have excellent gas barrier properties.

In the above packaging film, it is preferable that the coating layer has a hardness of 0.8 GPa or less measured in a cross section thereof using a nanoindentation method.

If the hardness of the coating layer is 0.8 GPa or less, deterioration in gas barrier properties due to retort treatment can be effectively suppressed compared to the case where the hardness of the coating layer is greater than 0.8 GPa.

In the above packaging film, it is preferable that the coating layer has a hardness of 0.15 GPa or more measured in a cross section thereof using a nanoindentation method.

If the hardness of the coating layer is 0.15 GPa or more, higher gas barrier properties can be achieved and good protection function can be exhibited for the vapor deposition layer when producing packaging containers, compared to the case where the hardness is less than 0.15 GPa.

Another aspect of the present disclosure provides a packaging container including the packaging film described above. The packaging container may be a packaging bag.

The packaging container includes the packaging film described above, and according to the packaging film, decrease in the ratio of polyolefin-based resins in the entire packaging film can be suppressed, while exhibiting excellent gas barrier properties. Therefore, according to the above packaging container, decrease in the ratio of polyolefin-based resins in the entire packaging container can be suppressed, while exhibiting excellent gas barrier properties.

Still another aspect of the present disclosure is a packaged product including the above packaging container and contents filled in the packaging container.

The packaged product includes the above packaging container, and according to the packaging container, decrease in the ratio of polyolefin-based resins in the entire packaging container can be suppressed, while exhibiting excellent gas barrier properties. Therefore, according to the packaged product, recycling after it has been opened can be easily performed, and quality deterioration of the contents can also be suppressed.

It should be noted that in the present specification, a polyolefin-based resin is also referred to as a polyolefin resin, a polyethylene-based resin is also referred to as a polyethylene resin, and a polypropylene-based resin is also referred to as a polypropylene resin.

### [Advantageous Effects of the Invention]

According to the present disclosure, there can be provided a packaging film, a packaging container, and a packaged product, which can suppress decrease in the ratio of polyolefin-based resins in the entire packaging film, while exhibiting excellent gas barrier properties.

### [Brief Description of the Drawings]

Fig. 1 is a cross-sectional view illustrating an embodiment of a packaging film according to the present disclosure.
Fig. 2 is a cross-sectional view illustrating an embodiment of a packaged product according to the present disclosure.

### [Description of the Embodiments]

Embodiments of the present disclosure will be described in detail below. It should be noted that the present invention should not be construed as being limited to the following embodiments.

### <Packaging film>

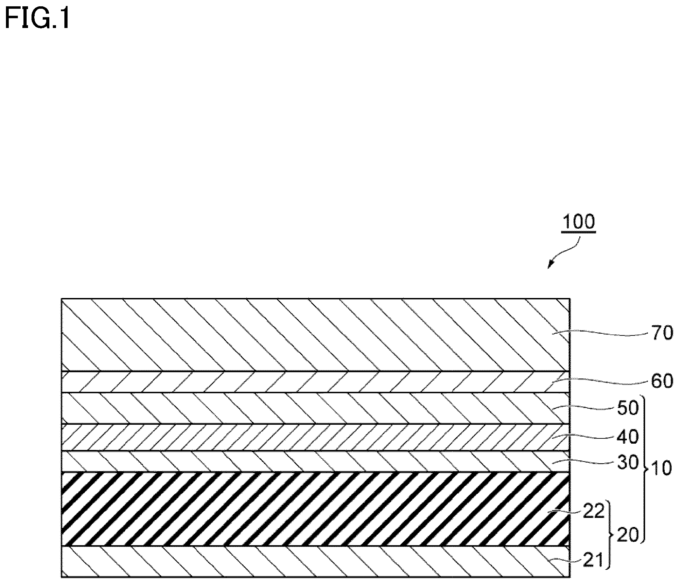

Referring to Fig. 1 first, an embodiment of a packaging film according to the present disclosure will be described first. Fig. 1 is a cross-sectional view illustrating an embodiment of a packaging film according to the present disclosure.

A packaging film 100 shown in Fig. 1 includes a gas barrier film 10, an adhesive layer 60, and a sealant layer 70 in this order. The gas barrier film 10 includes a substrate layer 20, a vapor deposition layer 40, and a coating layer 50 which is provided between the vapor deposition layer 40 and the adhesive layer 60 to cover the vapor deposition layer 40. **In** a cross section of the coating layer 50, the hardness measured using a nanoindentation method is 1.15 GPa or less.

The adhesive layer 60 is obtained by bonding an adhesive resin composition containing a polyolefin adhesive resin to the gas barrier film 10 by melt extrusion.

The sealant layer 70 contains a polyolefin-based resin.

The packaging film 100 may further include an anchor coat layer 30 between the vapor deposition layer 40 and the substrate layer 20. The substrate layer 20 may further include a heat-resistant layer 22. The heat-resistant layer 22 contains a high-melting-point resin having a melting point of 180°C or higher.

According to the packaging film 100 described above, decrease in the ratio of polyolefin-based resins in the entire packaging film 100 can be suppressed, while exhibiting excellent gas barrier properties.

The gas barrier film 10, the adhesive layer 60, and the sealant layer 70 will be described in detail below.

### (1) Gas barrier film

The gas barrier film 10 includes the substrate layer 20 and the vapor deposition layer 40, and the substrate layer 20 includes the polyolefin substrate layer 21 containing a polyolefin-based resin and the heat-resistant layer 22. The substrate layer 20 may further include an adhesive layer (hereinafter may also be referred to as substrate adhesive layer) as necessary between the polyolefin substrate layer 21 and the heat-resistant layer 22. The gas barrier film 10 may further include a printed layer as necessary.

### (Polyolefin substrate layer)

The polyolefin substrate layer 21 is a substrate layer containing a polyolefin-based resin. Specifically, the polyolefin-based resin may be a polyethylene- or polypropylene-based resin.

Examples of the polyethylene-based resin include low-density polyethylene resin (LDPE), medium-density polyethylene resin (MDPE), linear low-density polyethylene resin (LLDPE), ethylene-vinyl acetate copolymer (EVA), ethylene-α-olefin copolymer, and ethylene-(meth)acrylic acid copolymer.

Examples of the polypropylene-based resin include homo polypropylene, block polypropylene, random polypropylene, and a propylene-α-olefin copolymer. The α-olefin may be ethylene, 1-butene, or the like.

Of these, polypropylene-based resins are preferable from the perspective of heat resistance.

Of the polypropylene-based resins, homopolymers are preferable if emphasis is placed on rigidity and heat resistance of the packaging containers obtained using the packaging film 100.

The polyolefin-based resin may be a biomass-derived polyolefin-based resin, or a mechanically recycled or chemically recycled polyolefin-based resin.

The polyolefin substrate layer 21 may have a single-layer structure, or may have a multilayer structure.

If the substrate layer 20 includes the polyolefin substrate layer 21, the packaging film 100 produced using the substrate layer 20 can be improved in heat resistance and oil resistance.

The polyolefin substrate layer 21 may be a stretched or unstretched film, but is preferably a stretched film from the perspective of gas barrier properties. The stretched film may be a uniaxially or biaxially stretched film, but is preferably a biaxially stretched film from the perspective of improving heat resistance of the packaging film 100.

The content of the polyolefin-based resin in the polyolefin substrate layer 21 is preferably 70 mass% or more, more preferably 80 mass% or more, and even more preferably 90 mass% or more.

The polyolefin substrate layer 21 may contain additives as necessary. Examples of the additives include crosslinking agents, antioxidants, antiblocking agents, lubricants (slip agents), UV absorbers, light stabilizers, fillers, reinforcing agents, antistatic agents, pigments, and modifier resins.

The thickness of the polyolefin substrate layer 21 is preferably 5 µm or more, more preferably 10 µm or more, and even more preferably 15 µm or more. If the thickness of the polyolefin substrate layer 21 is 5 µm or more, the substrate layer 20 can be further improved in strength and heat resistance.

The thickness of the polyolefin substrate layer 21 is preferably 40 µm or less, more preferably 30 µm or less, and even more preferably 20 µm or less. If the thickness of the polyolefin substrate layer 21 is 40 µm or less, the substrate layer 20 can be further improved in processability, and the packaging film 100 can be imparted with elasticity.

The polyolefin substrate layer 21 may undergo surface treatment. Thus, adhesion to the heat-resistant layer 22 can be improved.

The surface treatment method is not particularly limited, and examples thereof include corona discharge treatment, ozone treatment, low-temperature plasma treatment, glow discharge treatment, and chemical oxidation treatment.

### (Heat-resistant layer)

The heat-resistant layer 22 contains a high-melting-point resin having a melting point of 180°C or higher. Thus, when an adhesive resin composition is bonded to the gas barrier film 10 by melt extrusion, even if the substrate layer 20 is cooled after transfer of the heat of the adhesive resin composition to the substrate layer 20 via the vapor deposition layer 40, the adhesive resin composition is less likely to expand and contract, thereby suppressing expansion and contraction of the polyolefin substrate layer 21 to suppress expansion and contraction of the vapor deposition layer 40 which is prone to cracking, and consequently, the packaging film 100 can have excellent gas barrier properties.

The melting point can be measured using a differential scanning calorimeter (DSC).

The heat-resistant layer 22 may be provided to the surface of the polyolefin substrate layer 21 facing the vapor deposition layer 40 as shown in Fig. 1, or may be provided to the surface of the polyolefin substrate layer 21 facing away from the surface thereof facing the vapor deposition layer 40, but it is preferably provided to the surface of the polyolefin substrate layer 21 facing the vapor deposition layer 40. In this case, since the heat-resistant layer 22 is disposed between the vapor deposition layer 40 and the polyolefin substrate layer 21, even if the polyolefin substrate layer 21 contracts after bonding of an adhesive resin composition to the gas barrier film 10 by melt extrusion to form the adhesive layer 60, expansion and contraction of the fragile vapor deposition layer 40 is further suppressed due to the heat-resistant layer 22 being sufficiently suppressed in expansion and contraction, and thus the packaging film 100 can have even better gas barrier properties.

The melting point of the high-melting-point resin is more preferably 185°C or higher, even more preferably 190°C or higher, even more preferably 200°C or higher, and most preferably 205°C or higher.

If the melting point of the high-melting-point resin is 185°C or higher, even if the polyolefin substrate layer 21 expands and contracts after bonding of an adhesive resin composition to the gas barrier film 10 by melt extrusion, expansion and contraction of the fragile vapor deposition layer 40 is suppressed even more due to the heat-resistant layer 22 being more sufficiently suppressed in expansion and contraction, and thus the packaging film 100 can have even better gas barrier properties. According to the packaging film 100, due to the heat-resistant layer 22 containing a high-melting-point resin having a melting point of 185°C or higher, deterioration in gas barrier properties can be suppressed even after moist heat treatment such as retort treatment and boiling treatment.

From the perspective of film formability of the heat-resistant layer 22, the melting point of the high-melting-point resin is preferably 265°C or lower, more preferably 260°C or lower, even more preferably 250°C or lower, even more preferably 240°C or lower, and most preferably 230°C or lower.

The high-melting-point resin may be any resin having a melting point of 180°C or higher, and examples thereof include a vinyl resin, polyamide resin, polyimide resin, polyester resin, and cellulose resin. These resins may be used singly or in combination of two or more.

Of these resins, a polyester resin or polyamide resin is preferable. These resins, due to having polar groups, can significantly improve adhesion between the heat-resistant layer 22 and the vapor deposition layer 40, and can effectively improve gas barrier properties of the vapor deposition layer 40.

The vinyl resin may be ethylene vinyl alcohol (EVOH), or the like. The ethylene content (mol%) in EVOH is preferably low, for example, preferably 35 mol% or less, and more preferably 32 mol% or less.

Examples of the polyester resin include a polyethylene terephthalate resin (PET) and polyethylene naphthalate resin (PEN).

Examples of the polyamide resin include nylon 6, nylon 6,6, MXD nylon, and amorphous nylon.

The high-melting-point resin is preferably a polyamide resin. Since the melting point of a polyamide resin is high, even if the polyolefin substrate layer 21 expands and contracts after bonding of an adhesive resin composition to the gas barrier film 10 by melt extrusion, expansion and contraction of the fragile vapor deposition layer 40 can be suppressed even more due to expansion and contraction of the heat-resistant layer 22 being more sufficiently suppressed, and thus the packaging film 100 can have even better gas barrier properties. Furthermore, even after the packaging film 100 is deformed, deterioration in gas barrier properties of the packaging film 100 can be suppressed, and heat resistance of the packaging film 100 can be improved. Furthermore, even after the packaging film 100 undergoes moist heat treatment such as retort treatment and boiling treatment, deterioration in gas barrier properties can be suppressed.

More preferably, the high-melting-point resin is nylon 6.

The content of the high-melting-point resin in the heat-resistant layer 22 is preferably 70 mass% or more, more preferably 80 mass% or more, and even more preferably 90 mass% or more.

The thickness of the heat-resistant layer 22 is preferably 1 µm or more, and more preferably 3 µm or more. If the thickness of the heat-resistant layer 22 is 1 µm or more, expansion and contraction of the polyolefin substrate layer 21 can be effectively suppressed when the substrate layer 20 is heated or cooled.

The thickness of the heat-resistant layer 22 is preferably 20 µm or less, more preferably 10 µm or less, and even more preferably 5 µm or less.

If the thickness of the heat-resistant layer 22 is 20 µm or less, the ratio of polyolefin-based resins in the entire packaging film 100 can be further increased and recyclability of the packaging film 100 can be enhanced.

In the packaging film 100, the ratio of the thickness of the heat-resistant layer 22 to the thickness of the gas barrier film 10 is preferably 50% or less, more preferably 40% or less, even more preferably 30% or less, and most preferably 25% or less.

If the ratio of the thickness of the heat-resistant layer 22 to the thickness of the gas barrier film 10 is 50% or less, the ratio of polyolefin-based resins in the entire packaging film 100 can be increased, thereby increasing recyclability of the packaging film 100.

In the packaging film 100, the ratio of the thickness of the heat-resistant layer 22 to the thickness of the gas barrier film 10 may be 2.5% or more, preferably 3.0% or more, more preferably 5.0% or more, and even more preferably 10% or more. If the ratio of the thickness of the heat-resistant layer 22 to the thickness of the gas barrier film 10 is 5.0% or more, expansion and contraction of the polyolefin substrate layer 21 can be effectively suppressed when the substrate layer 20 is heated or cooled.

### (Substrate adhesive layer)

The substrate adhesive layer contains a polyolefin adhesive resin. The polyolefin adhesive resin refers to an adhesive resin containing a polyolefin resin.

Examples of the polyolefin adhesive resin include acid-modified polypropylene-based resins and acid-modified polyethylene-based resins.

For example, the acid-modified polypropylene-based resins may include maleic acid-modified polypropylene-based resins.

A maleic acid modified polypropylene-based resin is obtained by modifying a polypropylene-based resin with maleic acid.

Examples of the polypropylene-based resin include homo polypropylene, block polypropylene, random polypropylene, and a propylene-α-olefin copolymer. The α-olefin may be ethylene, 1-butene, or the like.

For example, the acid-modified polyethylene-based resins may include maleic acid-modified polyethylene-based resins.

A maleic acid modified polyethylene-based resin is obtained by modifying a polyethylene-based resin with maleic acid.

Examples of the polyethylene-based resin include high-density polyethylene, medium-density polyethylene, low-density polyethylene, and linear low-density polyethylene obtained by copolymerizing ethylene and an α-olefin. The α-olefin may be ethylene, 1-butene, or 1-hexane.

The thickness of the substrate adhesive layer is not specifically limited, but is preferably 1 µm or more. The thickness of the substrate adhesive layer may be 3 µm or more, and preferably 5 µm or more. If the thickness of the substrate adhesive layer is 1 µm or more, adhesion between the polyolefin substrate layer 21 and the heat-resistant layer 22 is effectively improved.

The thickness of the substrate adhesive layer may be 10 µm or less, preferably 8 µm or less, more preferably 6 µm or less, and even more preferably 5 µm or less.

### (Substrate layer)

The substrate layer 20 can be obtained using coextrusion or the like.

The thickness of the substrate layer 20 is not specifically limited, but is preferably 10 µm or more, and more preferably 20 µm or more. If the thickness of the substrate layer 20 is 10 µm or more, adhesion between the gas barrier film 10 and the sealant layer 70 is effectively improved.

The thickness of the substrate layer 20 may be 50 µm or less, preferably 40 µm or less, and more preferably 30 µm or less.

### (Anchor coat layer)

The anchor coat layer 30 is a layer for further improving adhesion between the substrate layer 20 and the vapor deposition layer 40, and is provided between these layers.

The material constituting the anchor coat layer 30 is not specifically limited as long as the adhesion between the substrate layer 20 and the vapor deposition layer 40 is improved, but is preferred to contain a polyurethane resin.

**In** this case, even if the polyolefin substrate layer 21 expands and contracts after bonding of an adhesive resin composition to the gas barrier film 10 by melt extrusion, expansion and contraction of the fragile vapor deposition layer 40 is suppressed not only due to the heat-resistant layer 22 being sufficiently suppressed in expansion and contraction but also due to the expansion and contraction stresses transferred from the substrate layer 20 to the vapor deposition layer 40 being easily mitigated by the anchor coat layer 30 containing the polyurethane resin, and thus the packaging film 100 can have excellent gas barrier properties.

Such a polyurethane resin may be composed of, for example, a reaction product of an organosilane or organometallic compound, a polyol compound, and an isocyanate compound.

Examples of the organosilane include trifunctional organosilanes and hydrolysates of trifunctional organosilanes. Examples of the organometallic compound include metal alkoxides and hydrolysates of metal alkoxides. Examples of metal elements contained in the organometallic compound include Al, Ti and Zr. Hydrolysates of organosilanes and hydrolysates of metal alkoxides may have at least one hydroxyl group. From the perspective of transparency, the polyol compound is preferably an acrylic polyol. The isocyanate compound functions primarily as a crosslinking agent or a curing agent. The polyol compound and the isocyanate compound may be monomers or may be polymers.

The thickness of the anchor coat layer 30 is not specifically limited as long as adhesion between the substrate layer 20 and the vapor deposition layer 40 can be improved with the thickness, but is preferably 0.02 µm or more, more preferably 0.05 µm or more, and even more preferably 0.1 µm or more. If the thickness of the anchor coat layer 30 is 0.02 µm or more, even if the polyolefin substrate layer 21 expands and contracts after bonding of an adhesive resin composition to the gas barrier film 10 by melt extrusion, expansion and contraction of the fragile vapor deposition layer 40 is further suppressed due to the expansion and contraction stresses transferred from the substrate layer 20 to the vapor deposition layer 40 being effectively mitigated by the anchor coat layer 30 containing the polyurethane resin, and thus the packaging film 100 can have even better gas barrier properties.

From the perspective of suppressing decrease in the ratio of polyolefin-based resins in the entire packaging film 100, the thickness of the anchor coat layer 30 is preferably 2 µm or less. In this case, deterioration in gas barrier properties can be further suppressed even after moist heat treatment such as retort treatment and boiling treatment, compared to the case where the thickness of the anchor coat layer 30 exceeds 2 µm. The thickness of the anchor coat layer 30 is preferably 1.5 µm or less, more preferably 1.0 µm or less, even more preferably 0.5 µm or less, and most preferably 0.3 µm or less.

### (Vapor deposition layer)

The vapor deposition layer 40 is formed by vapor deposition and is constituted of an inorganic material. Examples of the inorganic material include metals and metal oxides.

Metal elements constituting the metals or metal oxides may include at least one metal element selected from the group consisting of Si, Al, Mg, Sn, Ti and In. Preferred metal oxides are silicon oxide (SiOx), aluminum oxide (AlOx), or a mixture thereof. Since SiOₓ and AlOₓ both have good water vapor barrier properties, the packaging film 100 can be improved in water vapor barrier properties. Of these materials, SiOx is preferable as a metal oxide. In this case, the packaging film 100 can have even better water vapor barrier properties.

The vapor deposition layer 40 may be constituted of a single layer or may be constituted of multiple layers.

The thickness of the vapor deposition layer 40 is not specifically limited, but is preferably 5 nm or more. In this case, deterioration in gas barrier properties of the packaging film 100 can be more sufficiently suppressed even after it undergoes moist heat treatment such as retort treatment and boiling treatment, compared to the case where the thickness of the vapor deposition layer 40 is less than 5 nm. The thickness of the vapor deposition layer 40 is more preferably 8 nm or more, even more preferably 10 nm or more, and most preferably 12 nm or more.

The thickness of the vapor deposition layer 40 is preferably 300 nm or less. In this case, deterioration in gas barrier properties of the packaging film 100 can be further suppressed even after it undergoes moist heat treatment such as retort treatment and boiling treatment, compared to the case where the thickness of the vapor deposition layer 40 exceeds 300 nm. Furthermore, the ratio of polyolefin-based resins in the entire packaging film 100 can be increased and recyclability of the packaging film 100 can also be enhanced. The thickness of the vapor deposition layer 40 is more preferably 200 nm or less, even more preferably 100 nm or less, and most preferably 50 nm or less.

### (Coating layer)

The coating layer 50 is a layer covering the vapor deposition layer 40. If the gas barrier film 10 has a coating layer 50, when the adhesive resin composition expands and contracts after being bonded to the gas barrier film 10 by melt extrusion, the expansion and contraction stresses are not transmitted directly to the vapor deposition layer 40 but are transmitted indirectly via the coating layer 50, thereby suppressing expansion and contraction of the vapor deposition layer 40.

The hardness of the coating layer 50 measured in a cross section thereof using a nanoindentation method is not specifically limited, but may be 1.15 GPa or less. In this case, when the adhesive resin composition expands and contracts after being bonded to the gas barrier film 10 by melt extrusion, the expansion and contraction stresses are effectively mitigated by the coating layer 50, and therefore expansion and contraction of the fragile vapor deposition layer 40 can be suppressed even more. The coating layer 50, which is sufficiently soft as having a hardness of 1.15 GPa or less, can effectively mitigate the expansion and contraction stresses.

The hardness of the coating layer 50 in a cross section thereof is preferably 1.10 GPa or less, more preferably 1.0 GPa or less, even more preferably 0.9 GPa or less, even more preferably 0.8 GPa or less, and most preferably 0.7 GPa or less. In particular, if the hardness of the coating layer 50 is 0.8 GPa or less, deterioration in gas barrier properties due to retort treatment can be effectively suppressed compared to the case where the hardness of the coating layer 50 is greater than 0.8 GPa.

The hardness of the coating layer 50 in a cross section thereof may be 0.15 GPa or more, preferably 0.20 GPa or more, more preferably 0.30 GPa or more, even more preferably 0.40 GPa or more, even more preferably 0.50 GPa or more, even more preferably 0.60 GPa or more, and most preferably 0.70 GPa or more.

The hardness of the coating layer 50 in a cross section thereof is measured using a nanoindentation method. The nanoindentation method is a measurement method in which a quasi-static indentation test is performed on a target measurement object to obtain physical properties of the sample.

The hardness of the coating layer 50 in a cross section thereof is measured by preparing a measurement sample and performing measurement on this sample. The measurement sample (cross-sectional sample) is prepared as follows.

Specifically, both surfaces of a packaging film 100 are subjected to corona treatment and then the corona-treated film is embedded in a visible-light-curable resin (ARONIX LCR D-800, manufactured by Toagosei Co., Ltd.). Then, the packaging film 100 is cut perpendicular to the lamination direction using an ultramicrotome Leica EM UC7 and a diamond knife Microstar LH. The revealed cross section is subjected to finishing processing under the conditions of a cutting thickness (feed) of 200 nm and cutting speed of 1 mm/s for use as a measurement sample.

For the measurement, a Hysitron TI-Premier (product name) manufactured by Bruker Japan Co., Ltd. is used as a measuring device, and a Berkovich type diamond indenter manufactured by Bruker Japan Co., Ltd. is used as an indenter. The measurement conditions are as follows.
Temperature: Room temperature (25°C)
Mode: Load control mode
Indentation and unloading: Indentation is performed up to a load of 15 µN at an indentation speed of 1.5 µN/sec, and then the maximum load is maintained for 5 seconds, after which the load is unloaded at a speed of 1.5 µN/sec.
Measurement points: A shape image of the sample surface is obtained using the shape measurement function of the measuring device which scans the sample surface with an indenter, and 20 points are specified on the sample surface from the shape image at intervals of 1 µm or more.

When calculating the hardness, fused silica is used as a standard sample to calibrate in advance the relationship between indenter-sample contact depth and projected contact area. Thereafter, the unloading curve in the region of 60 to 95% of the maximum load during unloading is analyzed using the Oliver-Pharr method to calculate the hardness.

The coating layer 50 may be a gas barrier coating layer. In this case, gas barrier properties of the packaging film 100 are improved. Furthermore, even if damage such as cracking occurs in the vapor deposition layer 40, deterioration in gas barrier properties of the packaging film 100 can be suppressed.

The gas barrier coating layer is constituted, for example, of a cured product of a composition containing a water-soluble polymer and at least one of a metal alkoxide and a hydrolysate thereof. The composition may further contain at least one of a silane coupling agent and a hydrolysate thereof.

The water-soluble polymer may be polyvinyl alcohol, polyvinyl pyrrolidone, starch, methyl cellulose, carboxymethyl cellulose, sodium alginate, or the like. Of these, polyvinyl alcohol (hereinafter may also be referred to as PVA) is preferable because oxygen barrier properties of the gas barrier film can be easily improved.

The metal alkoxide may be a compound expressed by the following General Formula (1).

M(OR¹¹)ₘ(R¹²)ₙ₋ₘ ... (1)

In Formula (1), R¹¹ is a monovalent organic group having 1 to 8 carbon atoms, and may be an alkyl group such as a methyl group and an ethyl group (R¹¹ may be a hydrolyzable group). R¹² is a monovalent organic group having 1 to 8 carbon atoms, and may be an alkyl group such as a methyl group and an ethyl group. M represents an n-valent metal atom such as Si, Ti, Al and Zr. m represents an integer from 1 to n. If there are multiple R¹¹ or R¹², these R¹¹ or R¹² may be identical with or different from each other.

Specifically, the metal alkoxide may be tetraethoxysilane [Si(OC₂H₅)₄], triisopropoxyaluminum [Al(O-2'-C₃H₇)₃], or the like. Tetraethoxysilane (hereinafter may also be referred to as TEOS) or triisopropoxyaluminum is preferable because, after being hydrolyzed, they are relatively stable in an aqueous solvent.

The silane coupling agent may be a compound expressed by the following General Formula (2).

(R²Si(OR³)₃)ₙ ... (2)

In General Formula (2), R² represents a monovalent organic group, and R³ represents an alkyl group or -C₂H₄OCH₃.

In this case, adhesion between the gas barrier coating layer and the vapor deposition layer 40 can be improved, and thus interlamellar separation (delamination) in the packaging film 100 can be suppressed.

It should be noted that R² and R³ may be identical with or different from each other. The groups of R³ may be identical with or different from each other.

The monovalent organic group represented by R² may be a vinyl group, epoxy group, mercapto group, amino group, or a monovalent organic functional group containing an isocyanate group. Of these groups, an isocyanate group is preferable as the monovalent organic functional group. In this case, the composition can have even better hot water resistance due to curing, and thus the packaging film 100 can be imparted with even greater lamination strength even after moist heat treatment such as retort treatment and boiling treatment.

The alkyl group represented by R³ may, for example, be a methyl group and an ethyl group. Of these groups, a methyl group is preferable. In this case, hydrolysis takes place faster.

n represents an integer greater than or equal to 1. If n is 1, the silane coupling agent represents a monomer and, if n is 2 or greater, the silane coupling agent represents a multimer. n is preferably 3. In this case, the gas barrier coating layer can be further improved in hot water resistance, and thus the gas barrier coating layer can be imparted with even greater lamination strength even after moist heat treatment such as retort treatment and boiling treatment.

Specific examples of the silane coupling agent include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, γ-methacryloxypropylmethyldimethoxysilane, and 1,3,5-tris(3-methoxysilylpropyl)isocyanurate.

If the composition contains PVA as a water-soluble polymer, the amount of PVA in the composition may be 15 mass% or more, preferably 20 mass% or more, and more preferably 25 mass% or more relative to the total solid content of the composition, from the perspectives of maintaining elasticity of the gas barrier coating layer and easily forming the gas barrier coating layer. If the composition contains PVA as a water-soluble polymer, the amount of PVA in the composition may be 70 mass% or less, preferably 60 mass% or less, and more preferably 50 mass% or less relative to the total solid content of the composition, from the perspective of easily maintaining low oxygen permeability even after heat sterilization treatment.

If the composition contains TEOS as a metal alkoxide, the amount of TEOS in the composition may be 30 mass% or more, preferably 35 mass% or more, and more preferably 40 mass% or more relative to the total solid content of the composition, from the perspective of easily maintaining low oxygen permeability even after heat sterilization treatment. If the composition contains TEOS as a metal alkoxide, the amount of TEOS in the composition may be 80 mass% or less, preferably 75 mass% or less, and more preferably 70 mass% or less relative to the total solid content of the composition, from the perspectives of maintaining elasticity of the gas barrier coating layer and easily forming the gas barrier coating layer. In the present specification, the amount of TEOS refers to a value expressed as SiO₂.

If the composition contains isocyanurate silane as a silane coupling agent, the amount of the isocyanurate silane in the composition may be 1 mass% or more, preferably 3 mass% or more, and more preferably 5 mass% or more relative to the total solid content of the composition from the perspectives of easily achieving hot water resistance and easily achieving excellent adhesion even after heat sterilization treatment. If the composition contains isocyanurate silane as a silane coupling agent, the amount of the isocyanurate silane in the composition may be 20 mass% or less, preferably 15 mass% or less, and more preferably 10 mass% or less relative to the total solid content of the composition from the perspectives of suppressing excessive decrease of other components in the composition and easily maintaining low oxygen permeability even after heat sterilization treatment.

The gas barrier coating layer can be formed by applying a gas barrier coating layer-forming composition onto the vapor deposition layer 40, and then heating and drying the composition. The gas barrier coating layer-forming composition can be prepared by dissolving a water-soluble polymer in an aqueous solvent (water, mixed solvent of water and alcohol, etc.), and mixing at least one of a metal alkoxide and a silane coupling agent, or a pre-hydrolyzed version of these, with the solution. This composition (mixed solution) may also contain known additives such as isocyanate compounds, dispersants, stabilizers, viscosity modifiers, and colorants.

The drying temperature when forming the gas barrier coating layer may be 40°C or higher, preferably 60°C or higher, and more preferably 90°C or higher, and may be 140°C or lower, preferably 130°C or lower, and more preferably 120 °C or lower.

The thickness of the gas barrier coating layer may be 80 nm or more, preferably 90 nm or more, more preferably 100 nm or more, even more preferably 150 nm or more, even more preferably 200 nm or more, and most preferably 300 nm or more. If the thickness of the gas barrier coating layer is 80 nm or more, low oxygen permeability can be easily maintained even after heat sterilization treatment. The thickness of the gas barrier coating layer may be 1,000 nm or less, preferably 700 nm or less, more preferably 500 nm or less, and even more preferably 400 nm or less. If the thickness of the gas barrier coating layer is 1,000 nm or less, deterioration in gas barrier properties due to occurrence of cracking in the gas barrier coating layer during coating can be suppressed. The thickness of the gas barrier coating layer may be 80 nm to 1,000 nm from the perspective of easily maintaining low oxygen permeability even after heat sterilization treatment while suppressing deterioration in gas barrier properties due to the occurrence of cracking in the gas barrier coating layer during coating.

### (Printed layer)

As mentioned above, the gas barrier film 10 may further include a printed layer as necessary. The printed layer can be provided to at least either of the substrate layer 20 and the coating layer 50.

The printed layer is formed using an ink which is obtained by adding various pigments, plasticizers, drying agents, stabilizers, etc. to a binder resin such as a urethane-, acrylic-, nitrocellulose-, or rubber-based resin. This printed layer can display letters, patterns, symbols, and combinations thereof.

The ink may be either a water-based ink or an oil-based ink, but is preferably a water-based ink. Water-based inks, which use water or alcohol as a solvent, can further reduce the environmental load. The ink may or may not be a biomass ink, but from the perspective of reducing the environmental load, it is preferably a biomass ink. The biomass ink refers to an ink that contains components derived from biological resources (biomass) such as cotton, pulp, rice bran, vegetable oil, and angiosperm seeds.

The forming method for the printed layer may be a known printing method such as gravure printing, offset printing, and flexographic printing.

### (2) Adhesive Layer

The adhesive layer 60 is obtained by bonding an adhesive resin composition containing a polyolefin adhesive resin to the gas barrier film 10 by melt extrusion. The polyolefin adhesive resin refers to an adhesive resin containing a polyolefin resin.

Examples of the polyolefin adhesive resin include acid-modified polypropylene-based resins and acid-modified polyethylene-based resins.

For example, the acid-modified polypropylene-based resins may include maleic anhydride graft-modified polypropylene-based resins.

A maleic anhydride graft-modified polypropylene-based resin is obtained by graft-modifying a polypropylene-based resin with a maleic anhydride. The graft ratio of the maleic anhydride is preferably 0.1 to 1 mass%. If the graft ratio of the maleic anhydride is 0.1 mass% or more, adhesion of the adhesive layer 60 may be further improved. If the graft ratio of the maleic anhydride is 1 mass% or less, moisture is less likely to be adsorbed and foaming is less likely to occur. Furthermore, processability of the adhesive resin composition may be improved.

Examples of the polypropylene-based resin include homo polypropylene, block polypropylene, random polypropylene, and a propylene-α-olefin copolymer. The α-olefin may be ethylene, 1-butene, or the like.

For example, the acid-modified polyethylene-based resins may include maleic anhydride graft-modified polyethylene-based resins.

A maleic anhydride graft-modified polyethylene-based resin is obtained by graft-modifying a polyethylene-based resin with a maleic anhydride. The graft ratio of the maleic anhydride is preferably 0.1 to 1 mass%. If the graft ratio of the maleic anhydride is 0.1 mass% or more, adhesion of the adhesive layer 60 may be further improved. If the graft ratio of the maleic anhydride is 1 mass% or less, moisture is less likely to be adsorbed and foaming is less likely to occur. Furthermore, processability of the adhesive resin composition may be improved.

Examples of the polyethylene-based resin include high-density polyethylene, medium-density polyethylene, low-density polyethylene, and linear low-density polyethylene obtained by copolymerizing ethylene and an α-olefin. The α-olefin may be ethylene, 1-butene, or 1-hexane.

The adhesive layer 60 is obtained by bonding an adhesive resin composition to the gas barrier film 10 by melt extrusion. After being brought into contact with the coating layer 50 of the gas barrier film 10, the adhesive resin composition is cooled by a cooling roll.

The thickness of the adhesive layer 60 is not specifically limited, but is preferably 1 µm or more, more preferably 5 µm or more, and even more preferably 10 µm or more. If the thickness of the adhesive layer 60 is 1 µm or more, adhesion between the gas barrier film 10 and the sealant layer 70 is effectively improved.

The thickness of the adhesive layer 60 may be 40 µm or less, preferably 30 µm or less, more preferably 20 µm or less, and even more preferably 15 µm or less.

It is preferable that the adhesive layer 60 is obtained by heat-treating an adhesive resin composition. In this case, the adhesive strength of the adhesive layer 60 can be improved, and thus the packaging film 100 can be improved in heat sealability, impact resistance, and resistance to moist heat treatment such as retort treatment, boiling treatment, and humidity control treatment. It should be noted that heat treatment can be performed by forming a layer made of an adhesive resin composition, and then heating the layer via a heater roll or an oven. Heat treatment can be performed, for example, in a state in which the gas barrier film 10 and the sealant layer 70 are bonded together via an adhesive resin composition.

### (3) Sealant layer

The sealant layer 70 contains a polyolefin-based resin.

The polyolefin-based resin may be a polyethylene- or polypropylene-based resin. Examples of the polyethylene-based resin include low-density polyethylene resin (LDPE), medium-density polyethylene resin (MDPE), linear low-density polyethylene resin (LLDPE), ethylene-vinyl acetate copolymer (EVA), ethylene-α-olefin copolymer, and ethylene-(meth)acrylic acid copolymer.

The polypropylene-based resin may be homo polypropylene, block polypropylene, random polypropylene, or a propylene-α-olefin copolymer. The α-olefin may be ethylene, 1-butene, or the like.

Of these, polypropylene-based resins are preferable from the perspective of heat resistance.

Furthermore, of the polypropylene-based resins, homo polypropylene is preferably used when emphasis is placed on rigidity or heat resistance of the packaging containers obtained using the packaging film 100.

The polyolefin-based resin may be a biomass-derived polyolefin-based resin, or a mechanically recycled or chemically recycled polyolefin-based resin.

The sealant layer 70 may have a single-layer structure, or may have a multilayer structure.

As necessary, the sealant layer 70 may contain additives. Examples of the additives include crosslinking agents, antioxidants, antiblocking agents, lubricants (slip agents), UV absorbers, light stabilizers, fillers, reinforcing agents, antistatic agents, pigments, and modifier resins.

If the polyolefin-based resin contained in the polyolefin substrate layer 21 of the substrate layer 20 and the polyolefin adhesive resin contained in the adhesive layer 60 are polypropylene-based resins, the polyolefin-based resin contained in the sealant layer 70 is preferably a polypropylene-based resin. In this case, the ratio of the single material (polypropylene-based resin) contained in the packaging film 100 can be further increased, and recyclability of the packaging film 100 is further improved.

Alternatively, if the polyolefin-based resin contained in the polyolefin substrate layer 21 of the substrate layer 20 and the polyolefin adhesive resin contained in the adhesive layer 60 are polyethylene-based resins, the polyolefin-based resin contained in the sealant layer 70 is preferably a polyethylene-based resin. In this case, the ratio of the single material (polyethylene-based resin) contained in the packaging film 100 can be further increased, and recyclability of the packaging film 100 is further improved.

The polyolefin-based resin contained in the sealant layer 70 may be a stretched or unstretched film, but is preferably an unstretched film (e.g., CPP). In this case, the melting point of the sealant layer 70 can be lowered, and melting of the substrate layer 20 can be easily suppressed when the packaging film 100 is heat-sealed.

The thickness of the sealant layer 70 is not specifically limited, but is preferably 40 µm or more, and more preferably 50 µm or more from the perspective of improving heat sealability.

From the perspective of improving elasticity of the packaging film 100, the thickness of the sealant layer 70 is preferably 100 µm or less, more preferably 80 µm or less, even more preferably 70 µm or less, and most preferably 60 µm or less.

The sealant layer 70 can be formed by bonding it to the adhesive layer 60 by melt extrusion. In this case, the sealant layer 70 may be formed by melt-extruding a sealant layer-forming resin composition for forming the sealant layer 70, for bonding to the adhesive layer 60, or by co-extruding an adhesive resin composition and a sealant layer-forming resin composition for forming the sealant layer 70, for bonding to the adhesive layer 60, with the adhesive resin composition facing the adhesive layer 60. Alternatively, the sealant layer 70 may be formed simultaneously with the adhesive layer 60 by co-extruding an adhesive resin composition for forming the adhesive layer 60 and a sealant layer-forming resin composition for forming the sealant layer 70.

### <Packaged product>

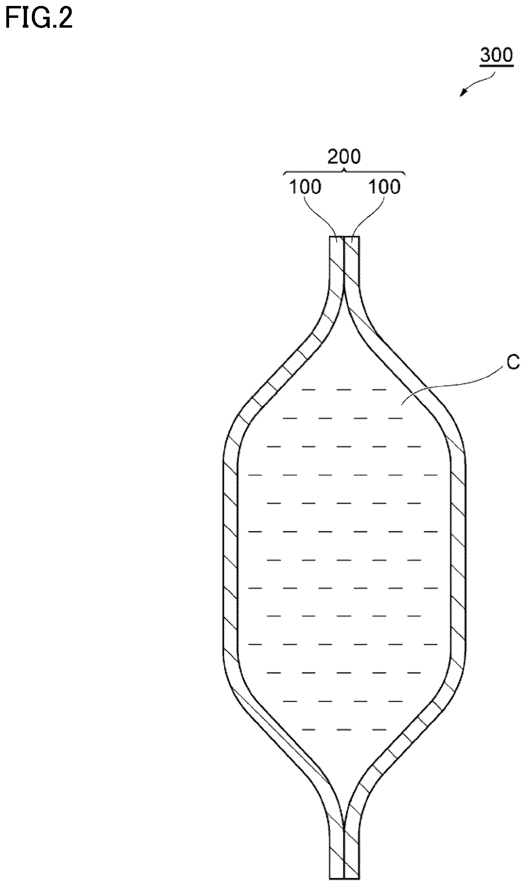

Next, referring to Fig. 2, an embodiment of a packaged product according to the present disclosure will be described. Fig. 2 is a cross-sectional view illustrating an embodiment of a packaged product according to the present disclosure. In Fig. 2, the same components as those in Fig. 1 are denoted by the same reference signs to omit repeated explanation.

As shown in Fig. 2, a packaged product 300 includes a packaging bag 200 as a packaging container, and contents C filled in the packaging bag 200. The packaging bag 200 shown in Fig. 2 has been obtained using two packaging films 100 and heat-sealing the peripheral portions of the packaging films 100 with the sealant layers 70 faced each other.

The packaged product 300 includes the packaging bag 200, and according to the packaging bag 200, decrease in the ratio of polyolefin-based resins in the entire packaging bag 200 can be suppressed, while exhibiting excellent gas barrier properties. Therefore, according to the packaged product 300, recycling after opening can be easily performed, and quality deterioration of the contents C can also be suppressed.

The packaging bag 200 can also be obtained by folding a single packaging film 100, and heat-sealing the peripheral portions of the packaging film 100 with surfaces of the sealant layer 70 faced each other.

Examples of the packaging bag 200 include a three-sided pouch, four-sided pouch, standing pouch, gusset pouch, and pillow packaging bag. The packaging bag 200 may further include a spout or a zipper according to the application.

The contents C are not specifically limited, but may be food, liquids, pharmaceuticals, electronic parts, etc.

In the above embodiment, although the packaging container is constituted of a packaging bag, the packaging container of the present disclosure may be constituted of a paper container for liquids or a laminate tube, instead of the packaging bag. If the packaging container is constituted of a paper container for liquids, the paper container for liquids can be obtained using a packaging film, and the packaging film further includes a paper substrate. The paper substrate may be disposed on the surface of the gas barrier film facing away from the surface provided with the sealant layer. The laminate tube may further include a cylindrical laminate tube body, a discharge port for discharging the contents of the laminate tube, and a shoulder portion connecting between the laminate tube body and the discharge port. The laminate tube body may be obtained using a packaging film, and the packaging film may further include a second sealant layer which is provided on the surface of the gas barrier film facing away from the surface provided with the sealant layer.

### <Summary of the present disclosure>

The present disclosure can be summarized as follows.
[1] A packaging film comprising a gas barrier film, an adhesive layer, and a sealant layer in this order, wherein the gas barrier film includes a substrate layer, a vapor deposition layer, and a coating layer provided between the vapor deposition layer and the adhesive layer to cover the vapor deposition layer; the substrate layer includes a polyolefin substrate layer containing a polyolefin-based resin; the coating layer has a hardness of 1.15 GPa or less measured in a cross section thereof using a nanoindentation method; the adhesive layer is obtained by bonding an adhesive resin composition containing a polyolefin adhesive resin to the gas barrier film by melt extrusion; and the sealant layer contains a polyolefin-based resin.
[2] The packaging film according to [1], wherein the coating layer is a gas barrier coating layer.
[3] The packaging film according to [1] or [2], wherein the polyolefin substrate layer is a stretched film.
[4] The packaging film according to any of [1] to [3], wherein the gas barrier film further includes an anchor coat layer containing a polyurethane resin between the vapor deposition layer and the substrate layer.
[5] The packaging film according to any of [1] to [4], wherein the coating layer has a hardness of 0.8 GPa or less measured in a cross section thereof using a nanoindentation method.
[6] The packaging film according to any of [1] to [5], wherein the coating layer has a hardness of 0.15 GPa or more measured in a cross section thereof using a nanoindentation method.
[7] A packaging container including the packaging film according to any of [1] to [6].
[8] A packaged product including the packaging container according to [7] and contents filled in the packaging container.

### Examples

In the following, the present disclosure will be specifically described taking examples; however, the present disclosure should not be construed as being limited to these examples.

### <Preparation of coating liquid>

Coating Liquids 1 to 4 as gas barrier coating layer-forming compositions used for examples and comparative examples were prepared as follows.

### (Coating Liquid 1)

The following Solutions A to C were mixed to obtain Coating Liquid 1. Coating Liquid 1 was prepared so that the mass ratio of TEOS (SiO₂ equivalent), PVA, and isocyanurate silane (R²Si(OH)₃ equivalent) as a silane coupling agent (hereinafter may also be referred to as SC agent) was 68/27/5, assuming the solid content to be 100.
Solution A: A solution obtained by mixing TEOS (product name: KBE04, solid content: 100 mass%, manufactured by Shin-Etsu Chemical Co., Ltd.), methanol (manufactured by Kanto Chemical Co., Ltd.), and 0.1N hydrochloric acid (manufactured by Kanto Chemical Co., Ltd.) in a mass ratio of 17:10:73, and stirring the mixture for 30 minutes to hydrolyze TEOS (5 mass% (SiO₂ equivalent) hydrolyzed solution of TEOS).
Solution B: A 5 mass% aqueous solution of PVA (product name: Kuraray Poval 60-98, manufactured by Kuraray Co., Ltd.).
Solution C: A solution obtained by diluting 1,3,5-tris(3-methoxysilylpropyl)isocyanurate (product name: X-12-965P, manufactured by Shin-Etsu Chemical Co., Ltd.) as an SC agent with a mixed solution of water/IPA = 1/1 (mass ratio) so that the solid content ratio was 5 mass% (R²Si(OH)₃ equivalent).

### (Coating Liquid 2)

Solutions A to C described above were mixed to obtain Coating Liquid 2. Coating Liquid 2 was prepared so that the mass ratio of TEOS (SiO₂ equivalent), PVA, and isocyanurate silane (R²Si(OH)₃ equivalent) as an SC agent was 47.5/47.5/4.8, assuming the solid content to be 100.

### (Coating Liquid 3)

Solutions A to C described above were mixed to obtain Coating Liquid 3. Coating Liquid 3 was prepared so that the mass ratio of TEOS (SiO₂ equivalent), PVA, and isocyanurate silane (R²Si(OH)₃ equivalent) as an SC agent was 80/15.2/4.8, assuming the solid content to be 100.

### (Coating Liquid 4)

Solutions A to C described above were mixed to obtain Coating Liquid 4. Coating Liquid 4 was prepared so that the mass ratio of TEOS (SiO₂ equivalent), PVA, and isocyanurate silane (R²Si(OH)₃ equivalent) as an SC agent was 85/10.2/4.8, assuming the solid content to be 100.

### <Preparation of anchor coat layer-forming composition>

An anchor coat layer-forming composition was prepared as follows .

An acrylic polyol and tolylene diisocyanate were mixed together so that the number of OH groups of the acrylic polyol was equivalent to the number of NCO groups of the tolylene diisocyanate, and the mixture was diluted with ethyl acetate so that the solid content (total mass of the acrylic polyol and tolylene diisocyanate) was 5 mass%. β-(3,4-epoxycyclohexyl)trimethoxysilane was further added to and mixed with the diluted mixture so that the content thereof was 5 parts by mass relative to the total mass, i.e., 100 parts by mass, of the acrylic polyol and tolylene diisocyanate, thereby preparing an anchor coat layer-forming composition (anchor coating agent).

### <Production of packaging film>

### (Example 1)

First, homo polypropylene (hereinafter also referred to as PP, melting point: 162°C, density: 0.9 g/cm³, MFR (230°C, load: 2.16 kg): 3.0 g/10 min) as a polyolefin substrate layer (PO substrate layer), maleic acid-modified polypropylene (hereinafter also referred to as PP1, melting point: 165°C, density: 0.89 g/cm³, MFR (230°C, load: 2.16 kg): 6.5 g/10 min) as a substrate adhesive layer, and nylon 6 (hereinafter also referred to as Ny, melting point: 225°C, density: 1.1 g/cm³, MVR (275°C, load: 5.0 kg): 70 cm³/10 min) as a heat-resistant layer, were co-extruded using a co-extrusion film molding machine so that these layers would have respective thicknesses of 10 µm, 5 µm and 5 µm as shown in Table 1 and were then subjected to biaxial stretching processing to prepare a substrate. In this case, the temperature of the joining points between these layers was set to 260°C.

Next, the anchor coat layer-forming composition prepared as described above was applied onto the heat-resistant layer of the substrate layer by gravure coating so as to have a dry thickness shown in Table 1 to form a coating film. The coating film was then heated at 120°C for 10 seconds and dried to form an anchor coat layer containing a polyurethane-based resin (PU).

Next, an SiOₓ film having a thickness of 0.03 µm was formed as a vapor deposition layer on the surface of the substrate layer using an electron beam heating vacuum deposition device.

Next, Coating Liquid 1 was applied onto the vapor deposition layer to form a coating film. The coating film as formed was subjected to heating at 80°C for 60 seconds for drying to form a gas barrier coating layer having a thickness of 0.32 µm as a coating layer.

Next, a white ink was printed solidly at a thickness of 1 µm on the gas barrier coating layer using a gravure method to form a printed layer. A gas barrier film was obtained in this way.

Next, maleic anhydride-modified PP (hereinafter also referred to as PP2, melting point: 106°C, density: 0.89 g/cm³, MFR (230°C, load: 2.16 kg): 12 g/10 min) was laminated as an adhesive layer on the printed layer of the gas barrier film at a molding temperature of 250°C by melt extrusion so as to have a thickness shown in Table 1, followed by laminating a CPP film (product name: TORAYFAN ZK207 manufactured by Toray Advanced Film Co., Ltd., thickness: 40 µm) as a sealant layer on the adhesive layer using a T-die casting method, thereby obtaining a laminate.

After that, the laminate was subjected to heat and pressure bonding for 40 seconds using a roll heated to 140°C.

Packaging films were obtained in this way.

### (Examples 2 to 3 and Comparative Examples 1 and 2)

Each packaging film was prepared as in Example 1 except that the gas barrier coating layer was formed using the coating liquid shown in Table 1 or 2 or formed not using a coating liquid.

### <Hardness of coating layer in cross section>

The hardness of the coating layer in a cross section of each of the packaging films obtained in the examples and comparative examples was measured using the nanoindentation method as follows.

Each measurement sample (cross-sectional sample) was prepared as follows. Specifically, both surfaces of the packaging film were subjected to corona treatment and then the corona-treated film was embedded in a visible-light-curable resin (ARONIX LCR D-800, manufactured by Toagosei Co., Ltd.). Then, the packaging film was cut perpendicular to the lamination direction using an ultramicrotome Leica EM UC7 and a diamond knife Microstar LH. The revealed cross section was subjected to finishing processing under the conditions of a cutting thickness (feed) of 200 nm, a cutting speed of 1 mm/s, for use as a measurement sample.

For measurement, a Hysitron TI-Premier (product name) manufactured by Bruker Japan Co., Ltd. was used as a measuring device, and a Berkovich type diamond indenter manufactured by Bruker Japan Co., Ltd. was used as an indenter. The measurement conditions were as follows.
Temperature: Room temperature (25°C)
Mode: Load control mode
Indentation and unloading: Indentation was performed up to a load of 15 µN at an indentation speed of 1.5 µN/sec, and then the maximum load was maintained for 5 seconds, after which the load was unloaded at a speed of 1.5 µN/sec.
Measurement points: A shape image of the coating layer cross section was obtained using the shape measurement function of the measuring device, which scanned the sample surface with an indenter, and 20 points were specified on the coating layer cross section from the shape image at intervals of 1 µm or more.

When calculating the hardness, fused silica was used as a standard sample to calibrate in advance the relationship between indenter-sample contact depth and contact projected area. Thereafter, the unloading curve in the region of 60 to 95% of the maximum load during unloading was analyzed using the Oliver-Pharr method to calculate the hardness in a cross section of each coating layer. The results are shown in Tables 1 and 2. In Tables 1 and 2, the hardness of the coating layer in a cross section thereof was shown in parentheses below the coating liquid used for forming the coating layer.

### <Evaluation for packaging film>

### (1) Gas barrier properties

### (Before retort treatment)

First, 100mm x 100mm test specimens were cut out from the respective packaging films of the examples and comparative examples, and oxygen permeability (unit: cc/m²·day·atm) of these specimens was measured under the conditions of a temperature of 30°C and a relative humidity of 70% using an oxygen permeability measuring device (product name OX-TRAN 2/20 manufactured by MOCON). In this case, measurement was conducted according to JIS K-7126-2. The results are shown in Tables 1 and 2.

### (After retort treatment)

The packaging films of the examples and comparative examples were each cut to 297 mm × 210 mm, and using the respective cut packaging films, three-sided pouches with an opening were prepared. In this case, each three-sided pouch was formed by folding the cut packaging film so that surfaces of the sealant layer faced each other, and heat-sealing the peripheral portions of the sealant layer. Then, tap water (city water) was poured into the three-sided pouch from the opening and then the opening was sealed to prepare a sealed pouch.

Then, the sealed pouch was subjected to retort treatment at 130°C for 30 minutes in a hot water storage retort device.

After that, a 100 mm × 100 mm test specimen was cut from the sealed body after retort treatment, and oxygen permeability (unit: cc/m²·day·atm) of the test specimen was measured in the same manner as before the retort treatment. The results are shown in Tables 1 and 2.

### (2) Ratio of polyolefin-based resins in entire packaging film

For each of the packaging films of the examples and comparative examples, a ratio (mass%) of polyolefin-based resins in the entire packaging film was calculated by converting the weight of the packaging film into specific gravity. The results are shown in Tables 1 and 2.

**[Table 1]**

| | | | Ex. 1 | | Ex. 2 | | Ex. 3 | |
|---|---|---|---|---|---|---|---|---|
| | | | Material | Thickness (µm) | Material | Thickness (µm) | Material | Thickness (µm) |
| Gas barrier film | Substrate layer | PO substrate layer | PP | 10 | PP | 10 | PP | 10 |
| | | Substrate adhesive layer | PP1 | 5 | PP1 | 5 | PP1 | 5 |
| | | Heat-resistant layer | Ny | 5 | Ny | 5 | Ny | 5 |
| | | Surface treatment | None | | None | | None | |
| | Anchor coat layer | | PU | 0.02 | - | - | - | - |
| | Vapor deposition layer | | SiOx | 0.03 | SiOx | 0.03 | SiOx | 0.03 |
| | Coating layer | | Coating Liquid 1 (0.8 GPa) | 0.32 | Coating Liquid 2 (0.3 GPa) | 0.32 | Coating Liquid 3 (1.1 GPa) | 0.32 |
| | Printed layer | | Yes | 1 | Yes | 1 | Yes | 1 |
| Adhesive layer | | | PP2 | 20 | PP2 | 20 | PP2 | 20 |
| Sealant layer | | | CPP | 40 | CPP | 40 | CPP | 40 |
| Extrusion mode for adhesive layer | | | Melt extrusion | | Melt extrusion | | Melt extrusion | |
| Extrusion mode for sealant layer | | | T-die casting | | T-die casting | | T-die casting | |
| Evaluation | Gas barrier properties (cc/m²·day·atm) | Before retort treatment | 0.2 | | 0.4 | | 0.8 | |
| | | After retort treatment | 0.6 | | 1.4 | | 2.3 | |
| | Polyolefin resin ratio in entire packaging film | Mass% | 92 | | 92 | | 92 | |

**[Table 2]**

| | | | Comp. Ex. 1 | | Comp. Ex. 2 | |
|---|---|---|---|---|---|---|
| | | | Material | Thickness (µm) | Material | Thickness (µm) |
| Gas barrier film | Substrate layer | PO substrate layer | PP | 10 | PP | 10 |
| | | Substrate adhesive layer | PP1 | 5 | PP1 | 5 |
| | | Heat-resistant layer | Ny | 5 | Ny | 5 |
| | | Surface treatment | None | | None | |
| | Anchor coat layer | | - | - | - | - |
| | Vapor deposition layer | | SiOx | 0.03 | SiOx | 0.03 |
| | Coating layer | | Coating Liquid 4 (1.2 GPa) | 0.32 | - | - |
| | Printed layer | | Yes | 1 | Yes | 1 |
| Adhesive layer | | | PP2 | 20 | PP2 | 20 |
| Sealant layer | | | CPP | 40 | CPP | 40 |
| Extrusion mode for adhesive layer | | | Melt extrusion | | Melt extrusion | |
| Extrusion mode for sealant layer | | | T-die casting | | T-die casting | |
| Evaluation | Gas barrier properties (cc/m²·day·atm) | Before retort treatment | 1.1 | | 2.1 | |
| | | After retort treatment | 2.6 | | 5.6 | |
| | Polyolefin resin ratio in entire packaging film | Mass% | 92 | | 92 | |

From the results shown in Tables 1 and 2, it was found that all of the packaging films of the examples each had a high ratio of polyolefin-based resins of 90 mass% or more in the entire packaging film, and had sufficiently low oxygen permeability before retort treatment.

Thus, according to the packaging film of the present disclosure, decrease in the ratio of polyolefin-based resins in the entire packaging film could be suppressed, while exhibiting excellent gas barrier properties.

### [Reference Signs List]

- 10: Gas barrier film
- 20: Substrate layer
- 21: Polyolefin substrate layer
- 22: Heat-resistant layer
- 30: Anchor coat layer
- 40: Vapor deposition layer
- 50: Coating layer
- 60: Adhesive Layer
- 70: Sealant layer
- 100: Packaging film
- 200: Packaging bag (packaging container)
- 300: Packaged product
- C: Contents

## Claims

1. A packaging film comprising a gas barrier film, an adhesive layer, and a sealant layer in this order, wherein
the gas barrier film includes a substrate layer, a vapor deposition layer, and a coating layer provided between the vapor deposition layer and the adhesive layer to cover the vapor deposition layer;
the substrate layer includes a polyolefin substrate layer containing a polyolefin-based resin;
the coating layer has a hardness of 1.15 GPa or less measured in a cross section thereof using a nanoindentation method;
the adhesive layer is obtained by bonding an adhesive resin composition containing a polyolefin adhesive resin to the gas barrier film by melt extrusion; and
the sealant layer contains a polyolefin-based resin.

2. The packaging film according to claim 1, wherein the coating layer is a gas barrier coating layer.

3. The packaging film according to claim 1, wherein the polyolefin substrate layer is a stretched film.

4. The packaging film according to claim 1, wherein the gas barrier film further includes an anchor coat layer containing a polyurethane resin between the vapor deposition layer and the substrate layer.

5. The packaging film according to claim 1, wherein the coating layer has a hardness of 0.8 Gpa or less measured in a cross section thereof using a nanoindentation method.

6. The packaging film according to claim 1, wherein the coating layer has a hardness of 0.15 Gpa or more measured in a cross section thereof using a nanoindentation method.

7. A packaging container comprising the packaging film according to any one of claims 1 to 6.

8. A packaged product comprising the packaging container according to claim 7, and contents filled in the packaging container.
